**Europäisches Patentamt**

**European Patent Office**

**Office européen des brevets**

(19) 

(11) Veröffentlichungsnummer : **0 106 127**
**B1**

(12) **EUROPÄISCHE PATENTSCHRIFT**

(45) Veröffentlichungstag der Patentschrift :
**10.02.88**

(21) Anmeldenummer : **83108870.3**

(22) Anmeldetag : **08.09.83**

(51) Int. Cl.⁴ : **C 08 J  9/16, C 08 F  2/38,
C 08 F 12/12// C08L25/16**

(54) Schaumkunststoffteilchen auf Basis von Poly-p-methylstyrol.

(30) Priorität : **18.09.82 DE 3234664**

(43) Veröffentlichungstag der Anmeldung :
**25.04.84 Patentblatt 84/17**

(45) Bekanntmachung des Hinweises auf die Patenterteilung : **10.02.88 Patentblatt 88/06**

(84) Benannte Vertragsstaaten :
**DE FR GB IT NL**

(56) Entgegenhaltungen :
**EP-A- 0 009 377
DE-A- 2 420 298
DE-A- 2 420 298
FR-A- 2 333 828
US-A- 4 237 255
US-A- 4 242 465
Encyclopedia of polymer science and technology,
Vol.3(1965), 584**

(73) Patentinhaber : **BASF Aktiengesellschaft
Carl-Bosch-Strasse 38
D-6700 Ludwigshafen (DE)**

(72) Erfinder : **Hahn, Klaus, Dr.
Im Buegen 9
D-6719 Kirchheim (DE)**
Erfinder : **De Grave, Isidoor, Dr.
Mandelring 3
D-6706 Wachenheim (DE)**
Erfinder : **Shick, Rupert, Dr.
Ruwerstrasse 3
D-6703 Limburgerhof (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**0 106 127**

**Beschreibung**

Die Erfindung betrifft Schaumkunststoffteilchen mit hoher Wärmeformbeständigkeit und niedriger Schüttdichte auf Basis von Poly-p-methylstyrol, sowie ein Verfahren zur Herstellung von treibmittelhaltigen Kunststoffteilchen, aus denen sich solche Schaumstoffteilchen herstellen lassen.

Die Wärmeformbeständigkeit von Schaumpolystyrol liegt bei 105 °C. Lagert man solche Schaumstoffe bei höheren Temperaturen, so verziehen und verbiegen sie sich. Man hat deshalb Schaumkunststoffe aus Styrol/Maleinsäureanhydrid-Copolymeren hergestellt, die bekanntlich eine höhere Wärmeformbeständigkeit als Polystyrol aufweisen. Überträgt man die bei der Herstellung von expandierbaren Polystyrol (EPS)-Teilchen bekannte Technologie auf die Styrol/Maleinsäureanhydrid-Copolymeren, so stellt man fest, daß die entsprechenden expandierbaren Kunststoffteilchen bei der Verarbeitung mit üblichen EPS-Schäumapparaturen eine verhältnismäßig geringe Expandierbarkeit zeigen : Schüttdichten unter 35 g.l$^{-1}$ sind nur schwer zu erreichen und die Schäumgeschwindigkeiten sind unzureichend.

Es ist bekannt, daß auch Poly-p-methylstyrol eine höhere Wärmeformbeständigkeit als Polystyrol aufweist. Aus der US-A-4 237 255 ist die Herstellung von teilchenförmigen Poly-p-methylstyrol durch Polymerisation in wäßriger Suspension bekannt. Nach der US-A-4 242 465 werden Schaumstoffe auf Basis von Poly-p-methylstyrol durch Einarbeiten eines Treibmittels in das geschmolzene Polymere und Extrusion zu Schaumstoffbahnen hergestellt.

Versucht man nun, auch hier die EPS-Technologie anzuwenden, so erhält man wiederum Teilchen mit zu geringer Expandierbarkeit. Auch eine Erhöhung der Treibmittelmenge, z. B. von den bei EPS üblichen 7 Gew.% auf 9 oder 10 Gew.% führt nicht zu einer merklichen Erniedrigung der Schüttdichte, man erhält vielmehr nach dem Versintern der Schaumstoffteilchen Formkörper mit unregelmäßiger Zellstruktur, die zum Schrumpfen und Einfallen neigen. Die Expandierbarkeit läßt sich zwar durch Zusatz von üblichen Weichmachern, wie Cumol oder Ethylbenzol bei der Herstellung von treibmittelhaltigem Poly-p-methylstyrol verbessern, was aber mit einer Erniedrigung der Wärmeformbeständigkeit der daraus hergestellten Schaumstoffe auf Temperaturen unter 110 °C erkauft wird.

Der Erfindung lag daher die Aufgabe zugrunde, Schaumkunststoffteilchen mit erhöhter Wärmeformbeständigkeit bereitzustellen, die bei ihrer Herstellung auf üblichen EPS-Verarbeitungsmaschinen zu niedrigen Schüttdichten aufschäumen.

Es wurde gefunden, daß man Kunststoffteilchen, die zu Schaumstoffteilchen verschäumt werden können, erhält, wenn man die Polymerisation von p-Methylstyrol in wäßriger Suspension in Gegenwart von molekulargewichtsregelnden Substanzen durchführt.

Gegenstand der Erfindung sind Schaumkunststoffteilchen auf Basis von Poly-p-methylstyrol, die sich durch folgende Eigenschaften auszeichnen :

a) ihre Teilchengröße liegt zwischen 0,2 und 3 cm,
b) ihre Wärmeformbeständigkeit nach DIN 53 424 liegt oberhalb von 110 °C,
c) ihre Schüttdichte liegt unterhalb von 35 g.l$^{-1}$.

Gegenstand der Erfindung sind außerdem die Verfahren zur Herstellung von Schäumbaren Kunststoffteilchen gemäß den Patentansprüchen 2 und 3.

Die gute Wärmeformbeständigkeit der Schaumstoffteilchen, die bevorzugt oberhalb von 112 °C und insbesondere zwischen 115 und 120 °C liegt, hat einen wesentlichen Vorteil bei der Herstellung von Schaumstoff-Formkörpern zur Folge : während bei der Herstellung von Fertigteilen aus vorgeschäumten EPS-Teilchen das Formteil auf 80 bis 85 °C abgekühlt werden muß, genügt bei der Verarbeitung der erfindungsgemäßen Schaumstoffteilchen eine Abkühlung auf 95 °C, ohne daß sich das Formteil hinterher verzieht. Das bedeutet eine erhebliche Energieeinsparung.

Bei der Herstellung der erfindungsgemäßen Schaumstoffteilchen durch Verschäumen von expandierbaren Teilchen in üblichen EPS-Schäumapparaturen zeigt sich, daß die treibmittelhaltigen Poly-p-methylstyrol-Teilchen eine gute Expandierbarkeit aufweisen. Die erreichbare minimale Schüttdichte liegt unterhalb von 35 g.l$^{-1}$, vorzugsweise unterhalb von 30 g.l$^{-1}$ und insbesondere zwischen 15 und 25 g.l$^{-1}$, wobei diese minimale Schüttdichte in verhältnismäßig kurzer Zeit, z. B. zwischen 10 und 20 min erreicht wird.

Ein Weg zur Herstellung der erfindungsgemäßen Schaumstoffteilchen besteht darin, daß man die Polymerisation von p-Methylstyrol in Gegenwart von molekulargewichtsregelnden Substanzen durchführt. Die sonstigen Polymerisationsbedingungen unterscheiden sich nich von den Bedingungen, die bei der Herstellung von EPS üblich und beispielsweise im Kunststoff-Handbuch, Band V, « Polystyrol », Carl-Hanser-Verlag, Seiten 679 bis 688, beschrieben sind.

Man polymerisiert p-Methylstyrol, gegebenenfalls zusammen mit bis zu 20 Gew.% an Comonomeren, in wäßriger Suspension, wobei vor, während oder nach der Polymerisation Treibmittel zugesetzt werden.

Als Comonomere kommen dabei z. B. in Frage : Styrol, -Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat. Als Treibmittel eignen sich z. B. unter Normalbedingungen gasförmige oder flüssige Kohlenwasserstoffe oder Halogenwasserstoffe, die Poly-p-methylstyrol nicht lösen und deren Siedepunkt unter dem Erweichungspunkt des Polymerisats liegt. Geeignete Treibmittel sind z. B. Propan, Butan, Pentan, Cyclopentan, Hexan, Cyclohexan, Dichlordifluormethan und Trifluorchlormethan. Die Treibmittel werden im allgemeinen in Mengen zwischen 3 und 10 Gew.%, bezogen auf die Monomeren, eingesetzt.

Vor, während oder nach der Polymerisation können weitere übliche Zusätze zugegeben werden, z. B. Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide ; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z. B. Glycerinester oder Hydroxycarbonsäureester.

Bei der Suspensionspolymerisation des p-Methylstyrols werden die Monomeren in Wasser suspendiert, wobei übliche organische oder anorganische Suspensionsstabilisatoren, vorzugsweise in Mengen zwischen 0,05 und 2 Gew.%, bezogen auf die Suspension, zugesetzt werden. Die Polymerisation wird im allgemeinen bei einer Temperatur zwischen 80 und 130 °C, vorzugsweise zwischen 100 und 120 °C ausgeführt. Zum Start der Polymerisation werden organische Polymerisationsinitiatoren, z. B. Peroxide oder Azoverbindungen verwendet, die unter dem Einfluß der Wärme in Radikale zerfallen. Sie werden in Mengen von 0,01 bis 1 Gew.%, bezogen auf die Monomeren, eingesetzt.

Erfindungsgemäß wird die Polymerisation in Gegenwart von molekulargewichtsregelnden Substanzen durchgeführt. Als molekulargewichtsregelnde Substanzen können z. B. Styrol-Oligomere in Mengen von 0,1 bis 10, vorzugsweise von 0,5 bis 5 Gew.%, bezogen auf die Monomeren, zugesetzt werden. Dies kann vor, während oder auch am Ende der Polymerisation geschehen. Styrol-Oligomere sind bekannt. Sie können z. B. hergestellt werden durch kontinuierliche thermische Polymerisation von Styrol unter erhöhtem Druck. Ihr mittleres Molekulargewicht (Zahlenmittel) liegt zwischen 500 und 5 000, vorzugsweise zwischen 800 und 2 000. Grundsätzlich kann auch das entsprechende oligomere p-Methylstyrol eingesetzt werden.

Bei einem anderen bevorzugten Verfahren werden bei der Suspensionspolymerisation von p-Methylstyrol 0,01 bis 1, vorzugsweise 0,05 bis 0,5 Gew.% eines organischen Kettenüberträgers mit einer Übertragungskonstanten K zwischen 0,1 und 50 bei einem Umsatz zwischen 20 und 95 % zugesetzt.

Es ist bekannt, daß Kettenüberträger oder Regler das Molekulargewicht von Styrolpolymerisaten herabsetzen. Dies macht man sich bei der Herstellung von Polystyrol mit verbesserter Fließfähigkeit zunutze, wobei man dem Polymerisationsansatz 0,01 bis 0,05 Gew.% eines Reglers, z. B. Dodecylmercaptan zugibt. Diese einfache Arbeitsweise führt bei expandierbarem Poly-p-methylstyrol nicht zum Ziel : Gibt man hier die Kettenüberträger bereits vor der Polymerisation zu, so erhält man treibmittelhaltige Polymerteilchen, die nach der Expansion stark schrumpfen und bei der Versinterung Schaumstoff-Formkörper mit geringer Dimensionsstabilität ergeben.

Die Kettenüberträger werden dem Polymerisationsansatz bei einem Umsatz zwischen 20 und 90 %, vorzugsweise zwischen 40 und 60 % zugesetzt. Unter Umsatz ist der prozentuale Anteil der polymerisierten Monomeren, bezogen auf die gesamten eingesetzten Monomeren, zu verstehen. Er kann beispielsweise dadurch gemessen werden, daß man die Polymerisation nach einer gewissen Zeit abbricht, z. B. durch Zusatz von Inhibitoren, und die Menge der nicht polymerisierten Monomeren bestimmt.

Es werden Kettenüberträger mit einer Übertragungskonstanten K (nach Vollwert, Grundriß der Makromolekularen Chemie, Springer Verlag 1962, Seiten 52 und 71) zwischen 0,1 und 50, bevorzugt zwischen 1 und 30, verwendet. In Frage kommen beispielsweise :

| | |
|---|---|
| n-Dodecylmercaptan | (K = 19) |
| tert.-Dodecylmercaptan | (K = 3) |
| n-Butylmercaptan | (K = 22) |
| tert.-Butylmercaptan | (K = 3,6) |
| Tetrabromkohlenstoff | (K = 2,2) |
| Pentaphenylethan | (K = 2,0) |

Die erfindungsgemäß hergestellten treibmittelhaltigen Kunststoff-Teilchen haben im allgemeinen einen Durchmesser zwischen 0,2 und 4 mm. Sie können nach üblichen Methoden, z. B. mit Wasserdampf, zu den erfindungsgemäßen Schaumstoffteilchen vorgeschäumt werden. Diese vorgeschäumten Teilchen können dann nach üblichen Verfahren zu Schaumstoff-Formteilen ausgeschäumt werden.

Die im Beispiel genannten Teile und Prozente beziehen sich auf das Gewicht.

Beispiel 1

A. Polymerisation

In einem druckfesten Rührkessel aus korrosionsfreiem Stahl wurde eine Mischung aus 150 Teilen Wasser, 0,1 Teilen Natriumpyrophosphat, 100 Teilen p-Methylstyrol, 7 Teile n-Pentan, 0,45 Teilen

3

Benzoylperoxid und 0,15 Teilen t-Butylperbenzoat (als Polymerisationsinitiatoren) unter Rühren auf 90 °C erhitzt.

Nach 2 Stunden bei 90 °C wurden 4 Teile einer 10 %igen wäßrigen Lösung von Polyvinylpyrrolidon zugegeben.

Dann wurde weitere 2 Stunden bei 90 °C, anschließend 2 Stunden bei 100 °C und schließlich 2 Stunden bei 120 °C gerührt. Die Kettenüberträger wurden nach der in der Tabelle angegebenen Zeit in den Rührkessel zudosiert. Das erhaltene Granulat mit einem mittleren Teilchendurchmesser von 1,5 mm wurde isoliert und getrocknet.

B. Verarbeitung

Zur Untersuchung der Expandierbarkeit diente ein mit einem Metallrahmen eingefaßtes Sieb (Maschenweite 0,1 bis 0,2 mm) mit den Abmessungen 1 000 × 250 mm, welches sich in einem abgeschlossenen Metallgehäuse mit Dampfzuleitung (2 bar) und Dampfabzugsvorrichtung befand.

Der Wasserdampf strömte von unten in die Vorschäumapparatur ein, passierte das Drahtgewebe mit den zu prüfenden Produkten ohne Überdruck und konnte durch die Dampfabzugsvorrichtung wieder entweichen.

Vor Beginn der Prüfungen wurde die Apparatur zunächst ca. 5 min. lang vorgeheizt. Anschließend wurden 100 g der expandierbaren Granulate mit Perlfraktionen zwischen 1,0 und 2,3 mm auf dem Drahtgewebe gleichmäßig verteilt, die Anlage geschlossen und das Dampfventil geöffnet.

Nach 2 min wurde das Dampfventil wieder geschlossen und das Metallgehäuse langsam geöffnet. Das frisch vorgeschäumte Material wurde 24 Stunden getrocknet und anschließend die Schüttdichte bestimmt.

Der Test wurde mit einer Vorschäumdauer von 4, 6, 10, 20 und 30 min. wiederholt. Die erhaltenen Ergebnisse sind in der Tabelle zusammengestellt.

(Siehe Tabelle Seite 5 f.)

Tabelle

| Kettenüber-träger | | | – | t-DM[1] | t-DM | t-DM | t-DM | n-DM[2] |
|---|---|---|---|---|---|---|---|---|
| Übertragungs-konstante | K | | – | 3 | 3 | 3 | 3 | 19 |
| Menge | Teile | | – | 0,05 | 0,1 | 0,3 | 0,5 | 0,3 |
| Dosierzeit | [min] nach 90°C | | – | 180 | 240 | 240 | 240 | 180 |
| Schüttdichte [g/l] nach | | | | | | | | |
| 2' | | | 55,9 | 47,5 | 40,2 | 37,9 | 30,1 | 41,4 |
| 4' | | | 48,6 | 40,8 | 36,1 | 35,1 | 28,9 | 37,0 |
| 6' | | | 43,9 | 37,1 | 34,2 | 31,3 | 23,8 | 36,4 |
| 10' | | | 39,3 | 34,1 | 32,0 | 29,7 | 21,4 | 32,8 |
| 20' | | | 41,1 | 33,9 | 31,8 | 28,4 | 19,9 | 33,1 |
| 30' | | | 42,0 | 33,9 | 32,1 | 27,5 | 19,2 | 32,9 |

[1] t-DM : tert.-Dodecylmercaptan
[2] n-DM : n-Dodecylmercaptan

0 106 127

Beispiel 2

Der Polymerisationsansatz von Beispiel 1 wurde wiederholt, wobei aber zu Beginn der Polymerisation 2 Teile Oligostyrol (mittleres Molekulargewicht $M_n = 1\,200$), im Monomeren gelöst, zugesetzt wurden. Die Verarbeitung erfolgte wie in Beispiel 1.

Ergebnisse

Schüttdichte nach

| | |
|---|---|
| 2' | 42,1 [g.l$^{-1}$] |
| 4' | 37,8 [g.l$^{-1}$] |
| 6' | 32,8 [g.l$^{-1}$] |
| 10' | 29,3 [g.l$^{-1}$] |
| 20' | 28,1 [g.l$^{-1}$] |
| 30' | 29,0 [g.l$^{-1}$] |

**Patentansprüche**

1. Schaumkunststoffteilchen auf Basis von Poly-p-methylstyrol, gekennzeichnet durch folgende Eigenschaften :
   a) ihre Teilchengröße liegt zwischen 0,2 und 3 cm,
   b) ihre Wärmeformbeständigkeit, gemessen nach DIN 53 424 liegt oberhalb von 110 °C,
   c) ihre Schüttdichte liegt unterhalb von 35 g.l$^{-1}$.
2. Verfahren zur Herstellung von schäumbaren Kunststoffteilchen auf Basis von treibmittelhaltigem Poly-p-methylstyrol durch Polymerisation p-Methylstyrol in wäßriger Suspension und Zusatz von flüchtigen organischen Treibmitteln vor, während oder nach der Polymerisation, dadurch gekennzeichnet, daß man während der Polymerisation bei einem Umsatz zwischen 20 und 95 % als molekulargewichtsregelnde Substanzen 0,01 bis 1 Gew.%, bezogen auf Monomere, eines organischen Kettenüberträgers mit einer Übertragungskonstanten K zwischen 0,1 und 50 zusetzt.
3. Verfahren zur Herstellung von schäumbaren Kunststoffteilchen auf Basis von treibmittelhaltigem Poly-p-methylstyrol durch Polymerisation von p-Methylstyrol in wäßriger Suspension und Zusatz von flüchtigen organischen Treibmitteln vor, während oder nach der Polymerisation, dadurch gekennzeichnet, daß man während der Polymerisation als molekulargewichtsregelnde Substanz 0,1 bis 10 Gew.% eines Oligomeren des Styrols oder p-Methylstyrols mit einem mittleren Molekulargewicht (Zahlenmittel) zwischen 500 und 5 000 zusetzt.

**Claims**

1. Foam particles based on poly-para-methylstyrene, characterized by the following properties :
   a) their particle size ranges from 0.2 to 3 cm,
   b) their heat distortion strength, measured according to DIN 53 424, is above 110 °C, and
   c) their bulk density is below 35 g/l.
2. A process for the preparation of expandable plastic particles based on poly-para-methylstyrene containing a blowing agent by the polymerization of para-methylstyrene in aqueous suspension, and the addition of volatile organic blowing agents prior to, during or after the polymerization, characterized in that, during the polymerization, from 0.01 to 1 % by weight, based on the monomer, of an organic chain transfer agent with a transfer constant K between 0.1 and 50 is added as molecular-weight-regulating substance at a conversion of from 20 to 95 %.
3. A process for the preparation of expandable plastic particles based on poly-para-methylstyrene containing a blowing agent by the polymerization of para-methylstyrene in aqueous suspension, and the addition of volatile organic blowing agent prior to, during or after the polymerization, characterized in that, during the polymerization, from 0.1 to 10 % by weight of an oligomer of styrene or para-methylstyrene having a number average molecular weight of from 500 to 5 000 is added as molecular-weight-regulating substance.

**Revendications**

1. Particules de matière plastiques alvéolaires à base de poly-p-méthylstyrène, caractérisées par les propriétés suivantes :
   a) leur grosseur de particules est comprise entre 0,2 à 3 cm,
   b) leur stabilité dimensionnelle à chaud, mesurée selon DIN 53 424, est supérieure à 110 °C,

c) leur foisonnement est inférieur à 35 g.l$^{-1}$.

2. Procédé de préparation de particules de matières plastiques expansibles, à base de poly-p-méthylstyrène contenant du gonflant, par polymérisation de p-méthylstyrène en suspension aqueuse et addition de gonflants organiques volatils, avant, pendant ou après la polymérisation, caractérisé par le fait que, pendant la polymérisation, on ajoute, comme substance régulatrice du poids moléculaire, pour un rendement de 20 à 95 %, 0,01 à 1 % en poids, rapporté au monomère, d'un agent de transfert de chaîne organique, à constante de transfert K comprise entre 0,1 et 50.

3. Procédé de préparation de particules de matière plastiques expansibles, à base de poly-p-méthylstyrène contenant du gonflant, par polymérisation de p-méthylstyrène en suspension aqueuse et addition de gonflants organiques volatils, avant, pendant ou après la polymérisation caractérisé par le fait que, pendant la polymérisation, on ajoute, comme substance régulatrice du poids moléculaire, 0,1 à 10 % en poids d'un oligomère de styrène ou p-méthylstyrène, d'un poids moléculaire moyen (moyenne en nombre) compris entre 500 et 5 000.